# EUROPÄISCHE PATENTSCHRIFT

(11) **EP 2 755 791 B1**
(45) Veröffentlichungstag und Bekanntmachung des Hinweises auf die Patenterteilung: **18.01.2017**
(21) Anmeldenummer: 12758494.4
(22) Anmeldetag: 13.09.2012
(51) Int. Cl.: B23F 23/12, B24B 33/10, B23F 19/05, B24B 33/04, B24B 33/08

(54) **WERKZEUGSPINDEL EINER HONMASCHINE MIT TOPFFÖRMIGEM HALTER FÜR EINEN HONRING**
TOOL SPINDLE OF A HONING MACHINE HAVING A CRUCIBLE-SHAPED HOLDER FOR A HONING RING
TOURILLON PORTE-OUTIL POUR MACHINE À RODER COMPORTANT UN PORTE-OUTIL CYLINDRIQUE POUR UNE BAGUE DE RODAGE

(30) Priorität: 16.09.2011 DE 102011082867
(43) Veröffentlichungstag der Anmeldung: 23.07.2014
(73) Patentinhaber: FELSOMAT GmbH & Co. KG, 75203 Königsbach-Stein (DE)
(72) Erfinder: JAEGER, Helmut, F., 8706 Meilen (CH)
(74) Vertreter: Kohler Schmid Möbus Patentanwälte
(86) Internationale Anmeldenummer: PCT/EP2012/067956
(87) Internationale Veröffentlichungsnummer: WO 2013/037891

(56) Entgegenhaltungen:
- EP-A1- 1 724 046
- CH-A5- 686 937
- DE-A1- 2 719 524
- DE-U1- 9 414 682
- "DVS Gruppe: Eine Gruppe stellt sich vor..", 31. Dezember 2006 (2006-12-31), DVS Gruppe, München, XP002693905, Seiten 1-28, in der Anmeldung erwähnt Seite 17 - Seite 17

## Beschreibung

Die Erfindung betrifft eine Werkzeugspindel für eine Honmaschine, umfassend einen motorisch angetriebenen Halter für einen Honring, wobei der Halter wenigstens ein hydraulisches Dehnelement aufweist, mit dem der Honring im Halter radial gespannt und zentriert werden kann, wobei das wenigstens eine Dehnelement innenseitig am umlaufenden Wandteil ausgebildet ist,
wobei alle Dehnelemente mit einer Hydraulikkammer verbunden sind,
und wobei nur ein einziges Stellelement vorgesehen ist, mit dem der Druck eines Hydraulikmediums in der Hydraulikkammer und damit in allen Dehnelementen einstellbar ist.

Eine solche Werkzeugspindel für eine Honmaschine ist bekannt geworden durch die DE 94 14 682 U1.

Beim Honen werden bei einem verzahnten Werkstück, etwa einem Zahnrad oder einem Getriebe, die Zahnflanken auf einem so genannten Honring, welcher meist aus einem keramischen Material besteht oder mit einem keramischen Material beschichtet ist, abgewälzt. Dadurch wird Material von den Zahnflanken des Werkstücks abgetragen. Der Hohnring besitzt eine kreisringförmige Grundform und weist seinerseits radial nach innen gerichtete Zahnflanken auf.

Während des Abwälzens von Werkstück und Honring wird der Honring mittels einer Werkszeugspindel rotiert; ebenso wird das Werkstück mittels einer Werkstückspindel rotiert. Die Werkstückspindel rotiert dabei mit Drehzahlen bis in die Größenordnung von 10.000 U/min. Da beim Honen ein Übermaß von lediglich in der Größenordnung 15-50µm entfernt wird, müssen der Honring und das Werkstück sehr genau zueinander ausgerichtet und synchronisiert sein.

Der Honring muss entsprechend fest und positionsgenau in der Werkzeugspindel gehalten werden.

Im Stand der Technik wird dazu ein hydraulisch zentrierendes System eingesetzt. Um den Honring für die Bearbeitung zu halten, wird mit hydraulischen Dehnelementen der Honring in radialer Richtung verspannt, indem ein Hydraulikmedium (meist ein Hydrauliköl) in die Dehnelemente gepresst wird. Die ausgedehnten Dehnelemente nehmen dem Honring die radiale Beweglichkeit.

Im Stand der Technik, etwa in der Firmendruckschrift "SynchroFine 205 HS" der PRÄWEMA Antriebstechnik GmbH, Eschwege/Werra, DE, wird der Druck im hydraulischen System über eine Vielzahl von Schrauben aufgebracht. Bei einem Werkzeugwechsel (Austausch des Honrings), etwa aufgrund von Verschleiß oder einer Umrüstung auf einen anderen Werkstücktypus, müssen diese Schrauben alle entspannt und wieder gespannt werden, wodurch der Werkzeugwechsel recht aufwändig ist.

Aus der DE 94 14 682 U1 ist eine als Adapterring ausgebildete Einspannvorrichtung für Honringe bekannt geworden, die innenseitig am Adapterring einen radial verstellbaren Innenmantel und einen dahinterliegenden Hydraulik-Druckraum zum Verspannen eines Honwerkzeugs ausbildet. Der Hydraulik-Druckraum ist mit einem Öl-Zylinderraum im Adapterring verbunden. Der Druck im Öl-Zylinderraum ist über einen schraubbaren Druckkolben einstellbar.

### Aufgabe der Erfindung

Der Erfindung liegt die Aufgabe zugrunde, eine Werkzeugspindel für eine Honmaschine zur Verfügung zu stellen, bei der der Halter stabil und einfach bedienbar ist.

### Kurze Beschreibung der Erfindung

Diese Aufgabe wird gelöst durch eine Werkzeugspindel der eingangs genannten Art, die dadurch gekennzeichnet ist,
dass der Halter topfförmig mit einem umlaufenden Wandteil und einem das Wandteil zu einer Seite hin abschließenden Bodenteil ausgebildet ist,
und dass die Hydraulikkammer im Bodenteil angeordnet ist.

Bei der erfindungsgemäßen Werkzeugspindel wird ein Hydrauliksystem in wesentlichen Teilen in ein Bodenteil des Halters integriert. Im Bodenteil ist eine typischerweise zentrale Hydraulikkammer vorgesehen, mit der eine oder (in der Regel) mehrere Hydraulikleitungen, die das wenigstens eine Dehnelement mit Hydraulikmedium beschicken, gleichzeitig mit Druck beaufschlagt oder von Druck entlastet werden können. Die Größe der Hydraulikkammer ist nicht durch die Wandstärke des umlaufenden Wandteils des Halters begrenzt, so dass mit einem einzigen Stellelement ohne weiteres ein für die Befestigung des Honrings während der Honbearbeitung ausreichender Hydraulikdruck für alle Dehnelemente bzw. den gesamten Innenumfang des Halters aufgebaut werden kann. Das einzige Stellelement, das meist innenseitig oder außenseitig am Bodenteil angeordnet ist (aber auch in das Bodenteil integriert sein kann), kann einfach und schnell bedient werden, um den Hydraulikdruck beim Werkzeugwechsel schnell ab- und aufzubauen.

Das Stellelement ist typischerweise zentral (d.h. auf der Rotationsachse des Halters, durch die der Mittelpunkt des Hohnrings verläuft) ausgebildet. Durch eine zentrale Anordnung von Hydraulikkammer und/oder Stellelement werden Druckunterschiede zwischen etwaigen verschiedenen Hydraulikleitungen und

Dehnelementen oder Teilbereichen eines hydraulischen Dehnelements vermieden. Typischerweise verändert das Stellelement (etwa mit einer verschieblichen Stempelfläche) ein dem Hydraulikmedium zur Verfügung stehendes Teilvolumen der Hydraulikkammer.

Das Bodenteil kann durchgehend (lochfrei) ausgebildet sein; in diesem Fall kann das Bodenteil auch zum Auffangen von Öl, welches bei der Honbearbeitung zum Kühlen und zum Entfernen von Spänen und Abrieb eingesetzt wird, genutzt werden. Alternativ (und bevorzugt) weist das Bodenteil Durchbrüche (Löcher) auf, um Öl abzuleiten oder auch um Gewicht einzusparen. Das Bodenteil stabilisiert den Halter auch mechanisch, so dass Unwuchten besser vermieden werden können.

Im Rahmen der Erfindung können ein oder mehrere hydraulische Dehnelemente im Halter vorgesehen sein, und je Dehnelement ist bevorzugt mindestens eine Hydraulikleitung vorgesehen, die das Dehnelement direkt mit der Hydraulikkammer verbindet; eine solche Hydraulikleitung verläuft dabei in der Regel teilweise im umlaufenden Wandteil und teilweise im Bodenteil.

### Bevorzugte Ausführungsformen der Erfindung

Bei einer vorteilhaften Ausführungsform der erfindungsgemäßen Werkzeugspindel ist vorgesehen, dass der Halter nur ein hydraulisches Dehnelement aufweist, dass das eine hydraulische Dehnelement umlaufend ausgebildet ist, und dass mehrere Hydraulikleitungen vorgesehen sind, welche das eine Dehnelement mit der Hydraulikkammer verbinden. Mit diesem Aufbau gelingt eine besonders genaue Zentrierung des Honrings im Halter, insbesondere die Hydraulikleitungen gleichmäßig verteilt angeordnet sind. Alternativ zu dieser Ausführungsform sind auch mehrere, bevorzugt gleichmäßig entlang des (inneren) Umfangs des Wandteils verteilte hydraulische Dehnelemente möglich; bei mehreren Dehnelementen ist typischerweise mindestens und bevorzugt genau eine Hydraulikleitung zur Hydraulikkammer je Dehnelement vorgesehen. Die Hydraulikleitungen sind (in allen Ausführungsformen) typischerweise sternförmig angeordnet und gleichmäßig entlang des Umfangs des Halters verteilt.

Besonders bevorzugt ist eine Ausführungsform, bei der das Stellelement als eine Stellschraube ausgebildet ist. Eine Stellschraube ist besonders einfach von einem Arbeiter zu bedienen und erlaubt den Aufbau großer Drücke mit vergleichsweise geringem Kraftaufwand beim Verstellen der Schraube. Falls gewünscht, kann eine Stellschraube gegen ein unbeabsichtigtes Verstellen leicht mit einer Kontermutter gesichert werden.

Eine vorteilhafte Weiterbildung dieser Ausführungsform sieht vor, dass die Stellschraube innenseitig am Bodenteil angeordnet ist. Die Innenseite ist in der Regel (bei zurückgezogener Werkstückspindel) gut zugänglich, und an der Unterseite des Bodenteils bleibt Platz für beispielsweise einen Motor der Werkzeugspindel. Man beachte, dass im Rahmen der vorliegenden Erfindung allgemein jeder Typ von Stellelement grundsätzlich in vorteilhafter Weise innenseitig am Bodenteil angeordnet werden kann.

Bei einer anderen Ausführungsform ist das Stellelement als ein verfahrbarer Schieber ausgebildet. Schieber können besonders leicht über einen externen Betätigungsmechanismus betätigt werden. Im einfachsten Fall ist der Schieber zentral, etwa außenseitig am Bodenteil ausgebildet, und kann manuell oder motorisch ("per Knopfdruck") durch den Betätigungsmechanismus, welcher nicht mit dem Halter rotiert, auch während einer Rotation des Halters in einer einen Honring arretierenden Stellung gehalten werden, etwa durch einen in das Bodenteil eingefahrenen Dorn.

Bei einer vorteilhaften Weiterbildung dieser Ausführungsform weist der Halter ein Vorspannmittel auf, durch den der Schieber in eine einen Honring einspannende und zentrierende Stellung vorgespannt ist. In diesem Fall braucht der Schieber während der Honbearbeitung nicht durch einen externen Betätigungsmechanismus gehalten zu werden. Als Vorspannmittel kann insbesondere eine Feder eingesetzt werden. Der Schieber kann manuell oder motorisch ("per Knopfdruck") für eine Umrüstung oder einen Austausch des Honrings gegen die Vorspannung gelöst werden. Dafür kann insbesondere ein externer Betätigungsmechanismus, welcher nicht mit dem Halter mit rotiert, eingesetzt werden.

Bei einer anderen, vorteilhaften Weiterbildung weist der Halter einen Arretiermechanismus auf, durch den der Schieber in einer oder mehreren, einen Honring einspannenden und zentrierenden Stellungen selbstarretierend ist. Auch in diesem Fall braucht der Schieber während der Honbearbeitung nicht durch einen externen Betätigungsmechanismus gehalten zu werden. Die Arretierung kann dann von außen manuell oder motorisch ("per Knopfdruck") für eine Umrüstung oder einen Austausch des Honrings gelöst werden. Dafür kann insbesondere ein Betätigungsmechanismus, welcher nicht mit dem Halter mit rotiert, eingesetzt werden.

Besonders vorteilhaft ist eine Ausführungsform, bei der ein motorischer Antrieb für den Halter außenseitig am Bodenteil des Halters vorgesehen ist. Durch den im Bereich des Bodenteils angeordneten Antrieb kann der Aufbau der Werkzeugspindel in radialer Richtung kompakt gehalten werden, insbesondere kleiner als im Falle einer Motoranordnung radial nach außen hin benachbart zum Wandteil.

Bevorzugt ist dabei eine Weiterbildung dieser Ausführungsform, die vorsieht, dass der Halter zentral außenseitlich am Bodenteil eine Welle aufweist oder starr mit einer Welle verbunden ist, und dass der Halter an der Welle gelagert und über die Welle motorisch angetrieben ist. Dieser Aufbau hat sich in der Praxis bewährt und ist besonders stabil.

In den Rahmen der vorliegenden Erfindung fällt auch eine Honmaschine, umfassend mindestens eine Werkstückspindel und eine erfindungsgemäße, oben beschriebene Werkzeugspindel. Der Honring (das Werkzeug) kann dann besonders einfach und schnell gewechselt werden. Die Werkzeugspindel ist typischerweise vertikal ausgerichtet, und die Werkzeugspindel ist typischerweise motorisch verfahrbar und mit ihrer Spindelachse vertikal ausgerichtet. Alternativ sind auch andere Ausrichtungen, etwa horizontale Ausrichtungen, von Werkzeugspindel und Werkstückspindel möglich.

Eine vorteilhafte Ausführungsform der erfindungsgemäßen Honmaschine sieht vor, dass die Hohnmaschine ein Maschinengehäuse umfasst, in welchem die Werkstückspindel und die Werkzeugspindel angeordnet sind,
und dass im Maschinengehäuse eine Arbeitswanne angeordnet ist, welche die Werkzeugspindel öldicht umschließt. Dadurch wird eine Verschmutzung des Innenraums des Maschinengehäuses vermieden. Die Arbeitswanne kann insbesondere trichterförmig ausgebildet sein.

Eine bevorzugte Weiterbildung dieser Ausführungsform sieht vor, dass die Arbeitswanne eine Blende mit einer Ausnehmung aufweist, wobei die Werkstückspindel mit einem Spindelkopf durch die Ausnehmung in die Arbeitswanne einführbar ist, so dass ein Spindelhals der Werkstückspindel die Ausnehmung öldicht verschließt,
und dass die Blende an der Arbeitswanne öldicht verschieblich gelagert ist, so dass die Blende während einer Zustellbewegung der Werkstückspindel relativ zur Werkzeugspindel mitgeführt wird. Dieser Aufbau hat sich in der Praxis bewährt und erlaubt eine sehr gute Dichtigkeit der Arbeitswanne.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: einen schematischen vertikalen Querschnitt durch eine Ausführungsform einer erfindungsgemäßen Werkzeugspindel, angeordnet in einer öldichten Arbeitswanne;
- Fig. 2: einen schematischen, horizontalen Querschnitt durch den Halter der Werkzeugspindel von Fig. 1, auf Höhe des einzigen Dehnelements;
- Fig. 3: einen schematischen horizontalen Querschnitt durch einen Halter einer Werkzeugspindel ähnlich der von Fig. 1, auf Höhe der mehreren Dehnelemente;
- Fig. 4: einen schematischen vertikalen Querschnitt durch eine Werkzeugspindel ähnlich der in Fig. 1, im Bereich von Stellelement und Hydraulikkammer, mit einem selbstarretierenden Schieber;
- Fig. 5: einen schematischen vertikalen Querschnitt durch eine Werkzeugspindel ähnlich der in Fig. 1, im Bereich von Stellelement und Hydraulikkammer, mit einem federgespannten Schieber;
- Fig. 6: einen schematische Seitenansicht einer Ausführungsform einer erfindungsgemäßen Honmaschine.

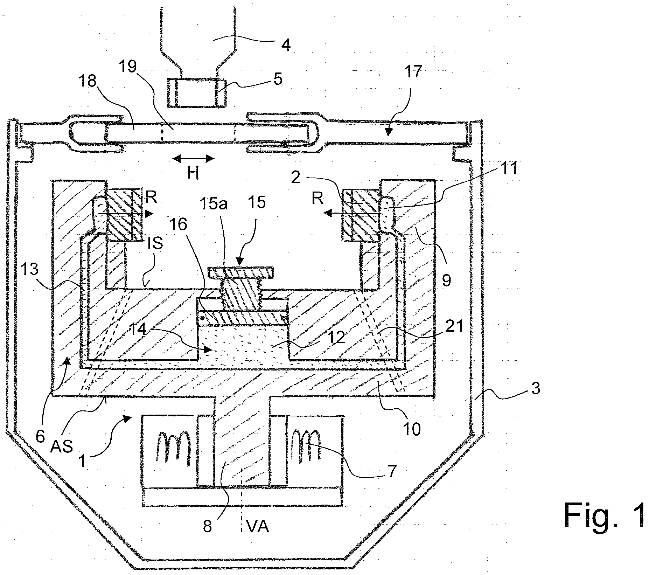

**Fig. 1** zeigt beispielhaft in einer vertikale Schnittdarstellung eine Ausführungsform einer erfindungsgemäßen Werkzeugspindel 1. In der Werkzeugspindel 1 wird ein Werkzeug, nämlich ein Honring 2, gehalten. Die Werkzeugspindel 1 ist in einer Arbeitswanne 3 angeordnet, die die Umgebung der Werkstückspindel 1 vor Verschmutzung durch Öl schützt. In der dargestellten Situation liefert eine Werkstückspindel 4 gerade ein am Spindelkopf gehaltenes Werkstück 5, hier ein Zahnrad, an, um es einer Honbearbeitung zu unterziehen; die Werkstückspindel 4 ist dabei noch außerhalb der Arbeitswanne 3.

Die Werkzeugspindel 1 umfasst einen Halter 6, in welchem der Honring 2 gehalten ist, eine Welle 8, und einen Elektromotor 7, mit dem die Welle 8 und damit auch der Halter 6 angetrieben werden können; der Honring 2 dreht dann entsprechend um eine vertikale Achse VA. Über die Welle 8 ist der Halter 6 hier insgesamt gelagert.

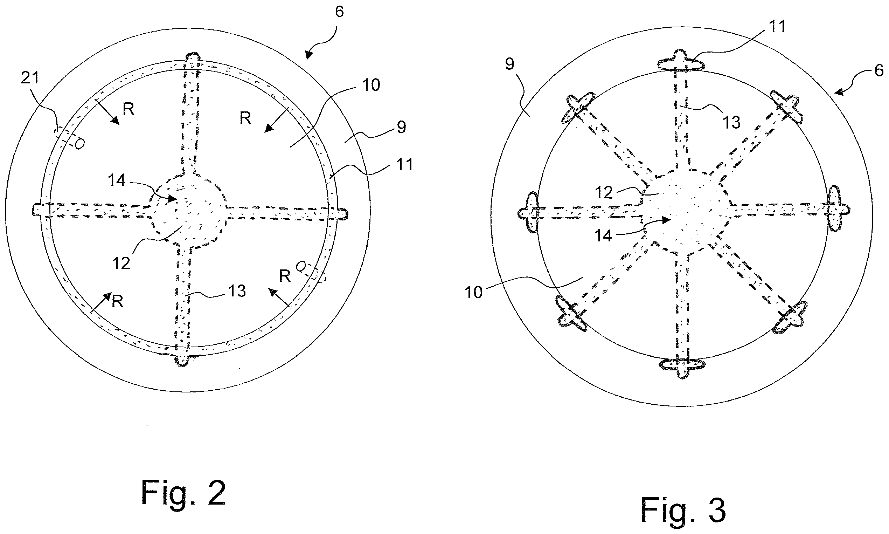

Der Halter 6 ist topfförmig aufgebaut und umfasst ein umlaufendes Wandteil 9 und ein Bodenteil 10, siehe dazu auch die horizontale Schittdarstellung des Halters 6 von **Fig. 2****,** die auch einige Details außerhalb der Schnittebene (die durch das Dehnelement 11 verläuft) gestrichelt zeigt. An der Innenseite des Wandteils 9 ist ein umlaufendes Dehnelement 11 ausgebildet. Das Dehnelement 11 dehnt sich bei steigendem Druck eines Hydraulikmediums (Hydraulikflüssigkeit) 12 (gepunktet dargestellt) radial nach innen aus (siehe Pfeilrichtung R) und kann dadurch den Honring 2 einklemmen. Umgekehrt wird bei fallendem Druck des Hydraulikmediums 12 der Honring 2 freigegeben.

Das Dehnelement 11 ist in der dargestellten Ausführungsform im Wesentlichen als ein ringförmiger Schlauch ausgebildet. An hier vier Stellen münden Hydraulikleitungen 13 in das Dehnelement 11. Die vier Hydraulikleitungen 13 sind mit einer Hydraulikkammer 14 verbunden, welche (in radialer Hinsicht) zentral im Bodenteil 10 ausgebildet ist. Die Hydraulikleitungen 13 verlaufen sternförmig von der Hydraulikkammer 14 weg durch das Bodenteil 10 und dann im Wandteil 9 hinauf; die Hydraulikleitungen 13 sind dabei symmetrisch um die Hydraulikkammer 14 verteilt (hier bei vier Hydraulikleitungen 13 mit einem Winkelversatz von 360°/4=90°) und gleichartig aufgebaut, insbesondere gleich lang.

Der Druck des Hydraulikmediums 12 in der Hydraulikkammer 14 - und damit im gesamten Hydrauliksystem (umfassend das Dehnelement 11, die Hydraulikleitungen 13 und die Hydraulikkammer 14) - kann mittels eines Stellelementes 15, welches hier als eine Stellschraube ("Hydrodehnschraube") 15a ausgebildet ist, eingestellt werden. Um den Druck in der Hydraulikkammer 14 zu erhöhen, kann die Stellschraube 15a weiter in das Bodenteil 10 hineingedreht werden. Ein mit der Stellschraube 15a verbundener Stempel 16 fährt dann tiefer in die Hydraulikkammer 14 hinein und versucht dadurch, das Hydraulikmedium 12 zu komprimieren bzw. aus der Hydraulikkammer 14 auszutreiben (in das Dehnelement 11 hinein). Um den Druck in der Hydraulikkammer 14 zu senken, kann die Stellschraube 15a aus dem Bodenteil 10 herausgedreht werden. Der Stempel 16 versucht dann, das Hydraulikmedium 12 zu expandieren bzw. in die Hydraulikkammer 14 einzusaugen.

Mittels des Stempels 16 können Volumina des Hydraulikmediums, die das Dehnelement 11 merklich expandieren (oder kontrahieren) können, aus der Hydraulikkammer 14 verdrängt (oder in diese eingesaugt) werden, so dass das einzelne Stellelement 15 ausreicht, um den Honring 2 verspannen und lösen zu können. Für die Ausbildung der Hydraulikkammer 14 und des Stellelements 15 steht grundsätzlich das gesamte Bodenteil 10 zur Verfügung, so dass diese ausreichend groß dimensioniert werden können. Insbesondere wird die radiale Ausdehnung des Halters 6 bzw. der Werkzeugspindel 1 nicht beeinflusst. Die Stellschraube 15a ist dabei von der Innenseite IS des Bodenteils zugänglich und daher von oben durch den Honring 2 hindurch für einen Arbeiter gut erreichbar.

Die Werkzeugspindel 1 ist in der Arbeitswanne 3 angeordnet, die näherungsweise trichterförmig ausgebildet ist. In deren oberem, weiten Bereich ist der Halter 6 angeordnet, und in deren unterem, sich verengenden Bereich ist der Elektromotor 7 im Bereich der Außenseite (Unterseite) AS des Bodenteils 10 angeordnet; durch diese Anordnung beeinflusst der Elektromotor 7 die radiale Ausdehnung der Werkzeugspindel 1 nicht.

Die Arbeitswanne 3 verfügt über einen Deckel 17, der zum Wechseln des Honrings 2 abgenommen werden kann. Im Deckel 17 ist eine Blende 18 horizontal verschiebbar gelagert (vgl. Pfeilrichtung H). Die Blende 18 verfügt über eine Ausnehmung (Öffnung) 19, deren Durchmesser dem Durchmesser des Spindelhalses der Werkstückspindel 4 entspricht, so dass durch die Ausnehmung 19 eingeführter Werkstückspindel 4 die Ausnehmung 19 vollständig verschlossen wird. Dann ist auch die Arbeitswanne 3 insgesamt öldicht verschlossen, so dass Öl, welches bei der Honbearbeitung auf den Kontaktbereich von Honring 2 und Werkstück 5 gesprüht wird, nicht in die Umgebung gelangen kann, sondern in der Arbeitswanne 3 verbleibt. Horizontale Zustellbewegungen der Werkstückspindel 4 führen dabei zu einer horizontalen Mitnahme der Blende 18, wodurch aber die Dichtigkeit der Arbeitswanne 3 nicht beeinträchtigt wird.

Im Bodenteil 10 sind in der Ausführungsform von Fig. 1 und Fig. 2 zwei Ablaufkanäle 21 vorgesehen, durch die Öl aus dem Halter 6 nach unten in die Arbeitswanne 3 ablaufen kann. Am Boden der Arbeitswanne 3 ist typischerweise ein Ölablauf eingerichtet (nicht dargestellt).

Die **Fig. 3** illustriert eine alternative Gestaltung eines Hydrauliksystems eines Halters 6 einer erfindungsgemäßen Werkzeugspindel ähnlich wie in Fig. 1 und Fig. 2 dargestellt; es werden nur die wesentlichen Unterschiede erläutert. Die Schnittdarstellung von Fig. 3 entspricht der Schnittdarstellung von Fig. 2.

Bei diesem Hydrauliksystem sind mehrere, hier acht, Dehnelemente 11 vorgesehen, die jeweils über eine Hydraulikleitung 13 mit der zentralen Hydraulikkammer 14 verbunden sind. Da alle Dehnelemente 11 den gleichen Druck des Hydraulikmediums 12 erfahren, kann damit eine sehr genaue Zentrierung eines Honrings erreicht werden. Die Druckbeaufschlagung erfolgt wie in Fig. 1 dargestellt über ein einzelnes Stellelement, welches an der Hydraulikkammer 14 wirkt.

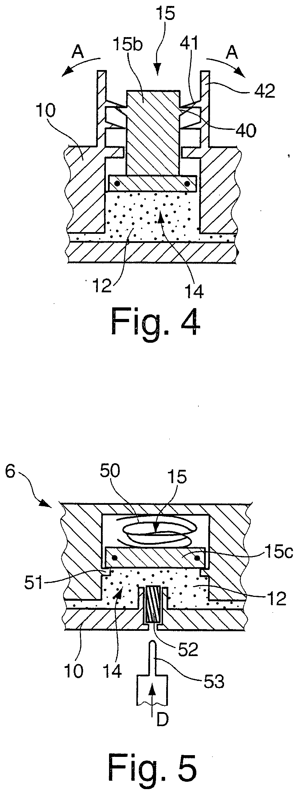

**Fig. 4** illustriert eine alternative Ausgestaltung eines Stellelements 15 , wie es auch in der Werkzeugspindel von Fig. 1 eingesetzt werden kann; es werden nur die wesentlichen Unterschiede erläutert.

Das Stellelement 15 ist hier als ein Schieber 15b ausgebildet, der in die Hydraulikkammer 14 eingeschoben oder aus dieser herausgezogen werden kann, um den Druck in des Hydraulikmediums 12 einzustellen. Wird der Schieber 15b in Fig. 4 nach unten in die Hydraulikkammer 14 eingedrückt, so schnappen Schiebernasen 40 des Schiebers 15b hinter Haltenasen 41 ein, die an Arretierstreben 42 ausgebildet sind. Die Arretierstreben 42 sind mit dem Bodenteil 10 fest verbunden und können elastisch nach außen (siehe Pfeilrichtung A) gebogen werden; dies geschieht beim Einschieben des Schiebers 15b durch Keilwirkung automatisch.

Im eingeschnappten Zustand der Schiebernasen 40 hinter den Haltenasen 41 kann der Schieber 15b nicht aus der Hydraulikkammer 14 herausgezogen werden. Dadurch kann ein druckbeaufschlagter Zustand, der durch ausreichend weites Einschieben des Schiebers 15b erreicht wurde, automatisch gesichert werden ("Selbstarretierung"); die Gesamtheit von Schiebernasen 40, Haltenasen 41 und Arretierstreben 42 kann auch als ein Arretiermechanismus bezeichnet werden. Erst wenn die Arretierstreben 42 nach außen gebogen werden (etwa manuell), kann der Schieber 15b zurückgezogen werden, und der Druck in der Hydraulikkammer 14 verringert sich.

Man beachte, dass im gezeigten Ausführungsbeispiel zwei Ebenen von Haltenasen 41 vorgesehen sind, so dass dadurch zwei unterschiedlich starke Drücke eingestellt werden können.

**Fig. 5** illustriert eine weitere, alternative Ausgestaltung eines Stellelements 15, wie es auch in der Werkzeugspindel von Fig. 1 eingesetzt werden kann; es werden nur die wesentlichen Unterschiede erläutert.

Das Stellelement 15 ist hier wiederum als ein Schieber 15c ausgebildet, der im Wesentlichen in das Bodenteil 10 integriert ist. Der Schieber 15c ist mittels einer Druckfeder 50 in eine Position für einen hohen Druck des Hydraulikmediums 12 in der Hydraulikkammer 14 (entsprechend einem eingespannten Honring) vorgespannt; die genaue Position wird hier durch feste Anschläge 51 festgelegt (Alternativ können auch die festen Anschläge 51 weggelassen werden, so dass sich die Schieberposition für einen hohen Druck im Gleichgewicht der Druckfeder 50 mit der Elastizität des oder der Dehnelemente ergibt; ohne feste Anschläge kann eine etwaige Leckage von Hydraulikmedium 12 leichter kompensiert werden).

Mittels eines Hilfsstempels 52 kann der Schieber 15c entgegen der Federkraft nach oben gedrückt und dadurch der Druck im Hydraulikmedium 12 verringert werden. Der Hilfsstempel 52 kann dazu mittels eines Dorns 53, der von unten in den Bodenteil 10 in Pfeilrichtung D eingeschoben wird, nach oben geschoben werden. Der Dorn 53 wird dabei motorisch über einen nicht näher dargestellten Betätigungsmechanismus, der hier nicht mit dem Halter 6 rotiert, verfahren.

Man beachte, dass der Hilfsstempel 52 einen kleinen Durchmesser haben sollte, um den Druck in der Hydraulikkammer 14 zu Beginn des Einschiebens des Hilfsstempels 52 nicht unnötig zu erhöhen.

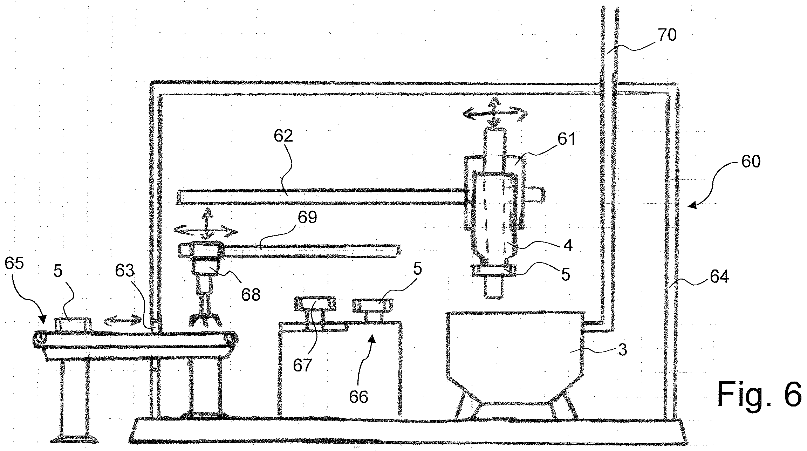

In der **Fig. 6** wird beispielhaft in einer Seitenansicht eine Ausführungsform einer erfindungsgemäßen Honmaschine 60 vorgestellt. Die Honmaschine 60 verfügt über eine Werkzeugspindel, welche in einer Arbeitswanne 3 angeordnet ist (etwa wie in Fig. 1 dargestellt), sowie über eine Werkstückspindel 4, die mittels eines Kreuzschlittens 61 und einem Portalsystem 62 horizontal und vertikal verfahrbar ist. Die Werkstückspindel 4 ist dazu ausgebildet, ein Werkstück 5 nicht nur für die Honbearbeitung zu drehen, sondern auch im Pick-Up-Verfahren aufzunehmen und abzulegen. Die Honmaschine 60 ist in einem im Wesentlichen geschlossenen Maschinengehäuse 64 angeordnet.

Die Honmaschine 60 verfügt über ein Förderbandsystem 65, über welches einzelne Werkstücke 5 durch eine Öffnung 63 im Maschinengehäuse 64 in die Honmaschine 60 eingebracht und ausgeschafft werden können.

Vom Förderbandsystem 65 kann ein Werkstück 5 zu einem Prüfplatz 66 verbracht und durch Abwälzen an einem Meisterrad (Leerrad) 67 vermessen werden. Zum Verbringen des Werkstücks 5 wird dabei ein in vertikaler Richtung teleskopierbarer Greifer 68 eingesetzt, der mittels eines Portalsystems 69 horizontal verfahren werden kann. Bei der Prüfung als nicht geeignet für die weitere Bearbeitung erkannte Werkstücke 5 werden vom Greifer 68 zurück zum Förderbandsystem 65 gebracht und ausgeschafft.

Für die Honbearbeitung geeignete Werkstücke 5 werden von der Werkstückspindel 4 am Prüfplatz 66 im Pick-Up-Verfahren ergriffen und zur Werkzeugspindel in der Arbeitswanne 3 verbracht. Nach Abschluss der Honbearbeitung an der Werkzeugspindel bzw. dem dortigen Honrad wird das Werkstück 5 mit der Werkstückspindel 4 zurück zum Förderbandsystem 65 verbracht und ausgeschafft.

Die Arbeitswanne 3 verhindert dabei einen Eintrag von Öl, welches bei der Honbearbeitung zum Kühlen und zum Wegschwämmen von Spänen und Abrieb vom Werkstück 5 und vom Honrad benötigt wird, in das Innere des Maschinengehäuses 64. Etwaige Ölreste auf einem bearbeiteten Werkstück 5 können mit Druckluft noch innerhalb der (durch die Werkstückspindel 4 verschlossenen) Arbeitswanne 3 weggeblasen werden. Der Innenraum der Honmaschine 60, d.h. das Innere des Maschinengehäuses 64 (außerhalb der Arbeitswanne 3) bleibt praktisch ölfrei. Dadurch ist das Innere des Maschinengehäuses 64 grundsätzlich nicht explosionsgefährdet. Allenfalls im Inneren der Arbeitswanne 3 kann noch ein explosives Öl-Luft-Gemisch entstehen, so dass nur noch die Arbeitswanne 3 mit einer Explosionsentlastung 70 ausgerüstet zu werden braucht.

## Patentansprüche

1. Werkzeugspindel (1) für eine Honmaschine (60),
umfassend einen motorisch angetriebenen Halter (6) für einen Honring (2), wobei der Halter (6) wenigstens ein hydraulisches Dehnelement (11) aufweist, mit dem der Honring (2) im Halter (6) radial gespannt und zentriert werden kann,
wobei das wenigstens eine Dehnelement (11) innenseitig am umlaufenden Wandteil (9) ausgebildet ist,
wobei alle Dehnelemente (11) mit einer Hydraulikkammer (14) verbunden sind,
und wobei nur ein einziges Stellelement (15) vorgesehen ist, mit dem der Druck eines Hydraulikmediums (12) in der Hydraulikkammer (14) und damit in allen Dehnelementen (11) einstellbar ist,
**dadurch gekennzeichnet,**
**dass** der Halter (6) topfförmig mit einem umlaufenden Wandteil (9) und einem das Wandteil (9) zu einer Seite hin abschließenden Bodenteil (10) ausgebildet ist,
und **dass** die Hydraulikkammer (14) im Bodenteil (10) angeordnet ist.

2. Werkzeugspindel (1) nach Anspruch 1, **dadurch gekennzeichnet,**
**dass** der Halter (6) nur ein hydraulisches Dehnelement (11) aufweist, dass das eine hydraulische Dehnelement (11) umlaufend ausgebildet ist, und dass mehrere Hydraulikleitungen (13) vorgesehen sind, welche das eine Dehnelement (13) mit der Hydraulikkammer (14) verbinden.

3. Werkzeugspindel (1) nach Anspruch 1 oder 2, **dadurch gekennzeichnet, dass** das Stellelement (15) als eine Stellschraube (15a) ausgebildet ist.

4. Werkzeugspindel (1) nach Anspruch 3, **dadurch gekennzeichnet, dass** die Stellschraube (15a) innenseitig am Bodenteil (10) angeordnet ist.

5. Werkzeugspindel (1) nach Anspruch 1 oder 2, **dadurch gekennzeichnet, dass** das Stellelement (15) als ein verfahrbaren Schieber (15b; 15c) ausgebildet ist.

6. Werkzeugspindel (1) nach Anspruch 5, **dadurch gekennzeichnet, dass** der Halter (6) ein Vorspannmittel aufweist, durch den der Schieber (15b; 15c) in eine einen Honring (2) einspannende und zentrierende Stellung vorgespannt ist.

7. Werkzeugspindel (1) nach Anspruch 5, **dadurch gekennzeichnet, dass** der Halter (6) einen Arretiermechanismus (40, 41, 42) aufweist, durch den der Schieber (15b; 15c) in einer oder mehreren, einen Honring (2) einspannenden und zentrierenden Stellungen selbstarretierend ist.

8. Werkzeugspindel (1) nach einem der vorhergehenden Ansprüche, **dadurch gekennzeichnet, dass** ein motorischer Antrieb für den Halter (2) außenseitig am Bodenteil (10) des Halters (6) vorgesehen ist.

9. Werkzeugspindel (1) nach Anspruch 8, **dadurch gekennzeichnet,**
**dass** der Halter (6) zentral außenseitlich am Bodenteil (10) eine Welle (8) aufweist oder starr mit einer Welle (8) verbunden ist,
und **dass** der Halter (6) an der Welle (8) gelagert und über die Welle (8) motorisch angetrieben ist.

10. Honmaschine (60), umfassend mindestens eine Werkstückspindel (4) und eine Werkzeugspindel (1) nach einem der vorhergehenden Ansprüche.

11. Honmaschine (60) nach Anspruch 10, **dadurch gekennzeichnet,**
**dass** die Hohnmaschine (60) ein Maschinengehäuse (64) umfasst, in welchem die Werkstückspindel (4) und die Werkzeugspindel (1) angeordnet sind,
und **dass** im Maschinengehäuse (64) eine Arbeitswanne (3) angeordnet ist, welche die Werkzeugspindel (1) öldicht umschließt.

12. Honmaschine (60) nach Anspruch 11, **dadurch gekennzeichnet, dass** die Arbeitswanne (3) eine Blende (18) mit einer Ausnehmung (19) aufweist, wobei die Werkstückspindel (4) mit einem Spindelkopf durch die Ausnehmung (19) in die Arbeitswanne (3) einführbar ist, so dass ein Spindelhals der Werkstückspindel (4) die Ausnehmung (19) öldicht verschließt,
und dass die Blende (18) an der Arbeitswanne (3) öldicht verschieblich gelagert ist, so dass die Blende (18) während einer Zustellbewegung der Werkstückspindel (4) relativ zur Werkzeugspindel (1) mitgeführt wird.

## Claims

1. Tool spindle (1) for a honing machine (60),
comprising a motor-driven holder (6) for a honing ring (2), wherein the holder (6) comprises at least one hydraulic expansion element (11) by means of which the honing ring (2) can be radially clamped and centred in the holder (6),
wherein the at least one expansion element (11) is formed inside on the peripheral wall part (9),
wherein all expansion elements (11) are connected to a hydraulic chamber (14), and wherein only one single adjustment element (15) is provided by means of which the pressure of a hydraulic medium (12) is adjustable in the hydraulic chamber (14) and thus in all the expansion elements (11),
**characterised in that**
the holder (6) is bowl-shaped with a peripheral wall part (9) and a bottom part (10) closing the wall part (9) at a side,
and that the hydraulic chamber (14) is arranged in the bottom part (10).

2. Tool spindle (1) according to claim 1, **characterised in that** the holder (6) comprises only one hydraulic expansion element (11), that the one hydraulic expansion element (11) is formed circumferentially, and that a plurality of hydraulic lines (13) are provided, which connect the one expansion element (13) with the hydraulic chamber (14).

3. Tool spindle (1) according to claim 1 or 2, **characterised in that** the adjustment element (15) is designed as an adjusting screw (15a).

4. Tool spindle (1) according to claim 3, **characterised in that** the adjusting screw (15a) is arranged inside on the bottom part (10).

5. Tool spindle (1) according to claim 1 or 2, **characterised in that** the adjustment element (15) is formed as movable slider (15b; 15c).

6. Tool spindle (1) according to claim 5, **characterised in that** the holder (6) comprises a preloading means by means of which the slider (15b; 15c) is preloaded into a position in which a honing ring (2) is clamped and centred.

7. Tool spindle (1) according to claim 5, **characterised in that** the holder (6) has a locking mechanism (40, 41, 42) by means of which the slider (15b, 15c) is self-locking in one or several positions in which a honing ring (2) is clamped and centered.

8. Tool spindle (1) according to any one of the preceding claims,
**characterised in that** a motorised drive is provided for the holder (2) on the outer side on the bottom part (10) of the holder (6).

9. Tool spindle (1) according to claim 8, **characterised in that** central on the outer side on the bottom part (10), the holder (6) has a shaft (8) or is rigidly connected to a shaft (8), and that the holder (6) is mounted on the shaft (8) and motor-driven by the shaft (8).

10. Honing machine (60) comprising at least one workpiece spindle (4) and one tool spindle (1) according to one of the preceding claims.

11. Honing machine (60) according to claim 10, **characterised in that** the honing machine (60) has a machine housing (64) in which the workpiece spindle (4) and the tool spindle (1) are arranged,
and that a working trough (3) is arranged in the machine housing (64), wherein said working trough (3) surrounds the tool spindle (1) in an oil-tight manner.

12. Honing machine (60) according to claim 11, **characterised in that** the working trough (3) has a screen (18) with a cut-out (19), wherein the workpiece spindle (4) with a spindle head can be inserted through the cut-out (19) into the working trough (3) so that a spindle collar on the workpiece spindle (4) provides an oil-tight seal for the cut-out (9),
and that the screen (18) is mounted displaceably and oil-tight on the working trough (3) so that the screen (18) is carried along when the workpiece spindle (4) performs a feed movement relative to the tool spindle (1).

## Revendications

1. Broche (1) porte-outils dévolue à une rodeuse (60),
comprenant un support (6) entraîné par moteur et dédié à une bague de rodage (2), ledit support (6) comportant au moins un élément hydraulique expansible (11) par lequel ladite bague de rodage (2) peut être bridée et centrée radialement dans ledit support (6), l'élément expansible (11), à présence minimale, étant ménagé à la face intérieure de la partie de paroi (9) périphérique,
tous les éléments expansibles (11) étant raccordés à une chambre hydraulique (14), sachant qu'il est prévu un seul et unique élément de réglage (15) permettant de régler la pression d'un fluide hydraulique (12) régnant dans ladite chambre hydraulique (14), et donc dans tous les éléments expansibles (11),
**caractérisée par le fait**
**que** le support (6) est réalisé sous la forme d'un pot comportant une partie de paroi (9) périphérique, et une partie de fond (10) marquant l'achèvement de ladite partie de paroi (9) en direction d'un côté ;
et par le fait que la chambre hydraulique (14) est située dans ladite partie de fond (10).

2. Broche (1) porte-outils selon la revendication 1, **caractérisée par le fait que** le support (6) ne compte qu'un élément hydraulique expansible (11) ;
**par le fait que** l'unique élément hydraulique expansible (11) offre une réalisation s'étendant sur le pourtour ;
et par la présence de plusieurs conduits hydrauliques (13) raccordant l'unique élément expansible (13) à la chambre hydraulique (14).

3. Broche (1) porte-outils selon la revendication 1 ou 2, **caractérisée par le fait que** l'élément de réglage (15) est réalisé en tant que vis de réglage (15a).

4. Broche (1) porte-outils selon la revendication 3, **caractérisée par le fait que** la vis de réglage (15a) est disposée à la face intérieure de la partie de fond (10).

5. Broche (1) porte-outils selon la revendication 1 ou 2, **caractérisée par le fait que** l'élément de réglage (15) est réalisé en tant que pièce (15b ; 15c) apte à coulisser.

6. Broche (1) porte-outils selon la revendication 5, **caractérisée par le fait que** le support (6) est doté d'un moyen de précontrainte par lequel la pièce (15b ; 15c), apte à coulisser, est précontrainte vers une position d'enserrement et de centrage d'une bague de rodage (2).

7. Broche (1) porte-outils selon la revendication 5, **caractérisée par le fait que** le support (6) est pourvu d'un mécanisme d'arrêt (40, 41, 42) par lequel la pièce (15b ; 15c), apte à coulisser, exerce un effet d'arrêt automatique dans une ou plusieurs position(s) d'enserrement et de centrage d'une bague de rodage (2).

8. Broche (1) porte-outils selon l'une des revendications précédentes, **caractérisée par le fait qu'**un entraînement motorisé, affecté au support (2), est prévu à la face extérieure de la partie de fond (10) dudit support (6).

9. Broche (1) porte-outils selon la revendication 8, **caractérisée par le fait que** le support (6) est muni d'un arbre (8), ou est relié rigidement à un arbre (8) au centre de la face extérieure de la partie de fond (10) ;
et **par le fait que** ledit support (6) est monté sur ledit arbre (8) et est entraîné, par moteur, par l'intermédiaire dudit arbre (8).

10. Rodeuse (60), comprenant au moins une broche (4) porte-pièces et une broche (1) porte-outils conforme à l'une des revendications précédentes.

11. Rodeuse (60) selon la revendication 10, **caractérisée par le fait que** ladite rodeuse (60) inclut un carter (64) dans lequel la broche (4) porte-pièces et la broche (1) porte-outils sont logées ;
et **par le fait qu'**une cuve de travail (3), située dans ledit carter (64) de la machine, ceinture ladite broche (1) porte-outils avec étanchéité à l'huile.

12. Rodeuse (60) selon la revendication 11, **caractérisée par le fait que** la cuve de travail (3) comporte une pièce d'obturation (18) percée d'un évidement (19), la broche (4) porte-pièces pouvant être introduite dans ladite cuve de travail (3) par une tête de ladite broche, en traversant ledit évidement (19), de telle sorte qu'un col de ladite broche (4) porte-pièces obture ledit évidement (19) avec étanchéité à l'huile ;
et **par le fait que** ladite pièce d'obturation (18) est montée sur ladite cuve de travail (3) avec faculté de coulissement, de manière étanche à l'huile, de telle sorte que ladite pièce d'obturation (18) soit entraînée conjointement au cours d'un mouvement d'avance de ladite broche (4) porte-pièces par rapport à la broche (1) porte-outils.
